(19) Europäisches Patentamt
European Patent Office
Office européen des brevets

(11) **EP 4 496 373 A1**

(12) **EUROPEAN PATENT APPLICATION**
published in accordance with Art. 153(4) EPC

(43) Date of publication:
**22.01.2025 Bulletin 2025/04**

(21) Application number: **23806987.6**

(22) Date of filing: **17.05.2023**

(51) International Patent Classification (IPC):
***H04W 24/02*** (2009.01)

(52) Cooperative Patent Classification (CPC):
Y02D 30/70

(86) International application number:
**PCT/CN2023/094779**

(87) International publication number:
**WO 2023/222036 (23.11.2023 Gazette 2023/47)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **19.05.2022 CN 202210555130**

(71) Applicant: **VIVO MOBILE COMMUNICATION CO., LTD.**
**Dongguan, Guangdong 523863 (CN)**

(72) Inventor: **LUO, Xi**
**Dongguan, Guangdong 523863 (CN)**

(74) Representative: **Murgitroyd & Company**
**Murgitroyd House**
**165-169 Scotland Street**
**Glasgow G5 8PL (GB)**

(54) **SCHEDULING REQUEST METHOD AND APPARATUS, ELECTRONIC DEVICE, AND READABLE STORAGE MEDIUM**

(57) This application discloses a scheduling request method and apparatus, an electronic device, and a readable storage medium, and pertains to the field of communication technologies. The method includes: generating a buffer status report BSR based on a second buffer size in a case that a first buffer size corresponding to to-be-sent data falls within a first preset range; and sending the BSR to a network side device. The second buffer size is determined based on the first buffer size, and the second buffer size is greater than or equal to the first buffer size.

Generate a buffer status report BSR based on a second buffer size in a case that a first buffer size corresponding to to-be-sent data falls within a first preset range — 201

Send the BSR to a network side device — 202

FIG. 1

## Description

### CROSS-REFERENCE TO RELATED APPLICATIONS

This application claims priority to Chinese Patent Application No. 202210555130.6, filed in China on May 19, 2022, which is incorporated herein by reference in its entirety.

### TECHNICAL FIELD

This application pertains to the field of communication technologies, and specifically, to a scheduling request method and apparatus, an electronic device, and a readable storage medium.

### BACKGROUND

The development of wireless communication technologies is accompanied with higher requirements of users on network service quality.

At present, due to objective reasons such as economic development and population density, there is an unbalanced problem in network deployment and coverage. Consequently, 4G/5G network coverage in some existing regions is weak signal coverage, or network congestion in some regions is severe, making data accumulation prone to occur when terminals perform wireless communication. As a result, problems such as a high latency and slow data sending and reception occur during data transmission, causing poor communication quality.

### SUMMARY

Embodiments of this application provide a scheduling request method, to indicate a network side device to allocate more radio resources to a terminal to send to-be-sent data. This improves a throughput of data transmitted over a network, reduces a latency during data sending by the terminal, and improves data transmission efficiency.

According to a first aspect, an embodiment of this application provides a scheduling request method. The method includes: generating a buffer status report BSR based on a second buffer size in a case that a first buffer size corresponding to to-be-sent data falls within a first preset range; and sending the BSR to a network side device. The second buffer size is determined based on the first buffer size, and the second buffer size is greater than or equal to the first buffer size.

According to a second aspect, an embodiment of this application provides a scheduling request apparatus. The apparatus includes a generation module and a sending module. The generation module is configured to generate a buffer status report BSR based on a second buffer size in a case that a first buffer size corresponding to to-be-sent data falls within a first preset range, where the second buffer size is determined based on the first buffer size, and the second buffer size is greater than or equal to the first buffer size. The sending module is configured to send the BSR generated by the generation module to a network side device.

According to a third aspect, an embodiment of this application provides an electronic device. The electronic device includes a processor and a memory. The memory stores a program or instructions capable of being running on the processor. When the program or instructions are executed by the processor, steps of the method according to the first aspect are implemented.

According to a fourth aspect, an embodiment of this application provides a readable storage medium. The readable storage medium stores a program or instructions. When the program or instructions are executed by a processor, steps of the method according to the first aspect are implemented.

According to a fifth aspect, an embodiment of this application provides a chip. The chip includes a processor and a communication interface. The communication interface is coupled to the processor. The processor is configured to run a program or instructions, to implement the method according to the first aspect.

According to a sixth aspect, an embodiment of this application provides a computer program product. The program product is stored in a storage medium. The program product is executed by at least one processor to implement the method according to the first aspect.

In embodiments of this application, a terminal generates the buffer status report BSR based on the second buffer size in a case that the first buffer size corresponding to the to-be-sent data falls within the first preset range, where the second buffer size is determined based on the first buffer size, and the second buffer size is greater than or equal to the first buffer size; and the terminal sends the BSR to the network side device. According to the method, in a case that the to-be-sent data is detected and data accumulation exists, the terminal may determine, based on a real buffer value of the to-be-sent data, the second buffer size greater than the real buffer value, generate the BSR based on the second buffer size, and report the BSR to the network side. In this way, in a case that accumulation of the to-be-sent data exists in a weak-field environment or a congestion environment, through user-defined reporting of the BSR corresponding to the buffer value greater than the real buffer value of the to-be-sent data, the network side device is indicated to allocate more radio resources to the terminal to send the to-be-sent data. This improves a throughput of data transmitted over a network, reduces a latency during data sending by the terminal, and improves data transmission efficiency.

### BRIEF DESCRIPTION OF DRAWINGS

FIG. 1 is a flowchart of a scheduling request method according to an embodiment of this application;

FIG. 2 is a schematic diagram 1 of a scheduling request method according to an embodiment of this application;

FIG. 3 is a schematic diagram 2 of a scheduling request method according to an embodiment of this application;

FIG. 4 is a schematic diagram of a structure of a scheduling request apparatus according to an embodiment of this application;

FIG. 5 is a schematic diagram of a structure of an electronic device according to an embodiment of this application; and

FIG. 6 is a schematic diagram of a hardware structure of an electronic device according to an embodiment of this application.

## DESCRIPTION OF EMBODIMENTS

The following clearly describes technical solutions in embodiments of this application with reference to accompanying drawings in embodiments of this application. It is clear that the described embodiments are some but not all embodiments of this application. All other embodiments obtained by a person of ordinary skill in the art based on embodiments of this application shall fall within the protection scope of this application.

In the specification and claims of this application, terms such as "first" and "second" are intended to distinguish between similar objects but are not used to indicate a specific order or sequence. It should be understood that data used in this way is exchangeable in a proper case, so that embodiments of this application can be implemented in an order other than the order shown or described herein. Objects differentiated by using "first", "second", and the like usually belong to one type, and a quantity of objects are not limited. For example, a first object may mean one or more objects. In addition, "and/or" in the specification and claims represents at least one of associated objects. A character "/" usually indicates an "or" relationship between associated objects.

The following details, with reference to the accompanying drawings by using specific embodiments and application scenarios thereof, a scheduling request method provided in embodiments of this application.

With rapid development of communication technologies in the 21st century, a transition from 2G/3G to 4G/5G has been successfully completed. At the end of the year 2013, the Ministry of Industry and Information Technology formally released fourth generation mobile communication to the three domestic operators announcing the arrival of the 4G era. In the following five to six years, network devices of the domestic operators sprang up. By the year 2019, a total of approximately 5.54 million domestic 4G eNodeBs had been constructed, and network coverage of the 4G eNodeBs had reached 98%. At the end of the year 2020, 5G SA (standalone) networks were formally commercially available on a large scale, and a construction scale of domestic 5G gNBs was growing vigorously. By the year 2021, more than seven hundred thousand 5G gNBs had been established, and a quantity of 5G users had accounted for 85% of a quantity of users worldwide. Plenty of remarkable data manifests flourishing development of communication technologies.

However, such rapid development is accompanied with some overt problems as follows: There are specific deviations in wireless network planning and engineering construction effects in normal coverage areas of networks planned by operators. After network coverage is planned and constructed, wireless environments in the areas change (for example, new mansions and buildings are added), and network construction is not updated in time. After network devices are normally deployed, a new coverage area, a new coverage requirement, and the like occur.

In some existing regions, due to objective reasons such as economic development and population density, there is an unbalanced problem in network deployment and coverage. Consequently, 4G/5G network coverage in some existing regions is weak signal coverage. As a result, terminals are confronted with problems such as a high latency and slow data sending and reception. Maximum transmit power (P_EMAX) configured by many outdoor networks does not reach maximum capabilities (P_CMAX) of terminals. In the related technology, in a weak signal environment, by increasing transmit power (transmit power, TX power) of a terminal without exceeding a capability range of the terminal, some chip manufacturers obtain a higher MCS (Modulation and Coding Scheme, modulation and coding scheme) delivered by a network, and obtain a better UL grant (uplink resource scheduling information) delivered by the network. In this case, the terminal side has a lower average latency, a lower uplink packet loss rate, and a lower latency rate. However, the foregoing power breakthrough solution has the following disadvantages:

(1) Limited by a constraint of a chip capability, not all platforms can use this "power breakthrough" manner.

(2) Power consumption is increased when the power breakthrough solution is triggered, and this is inapplicable to products that have strict requirements on power consumption.

(3) There is a risk of burning out a PA (power amplifier, power amplifier) device in the power breakthrough solution.

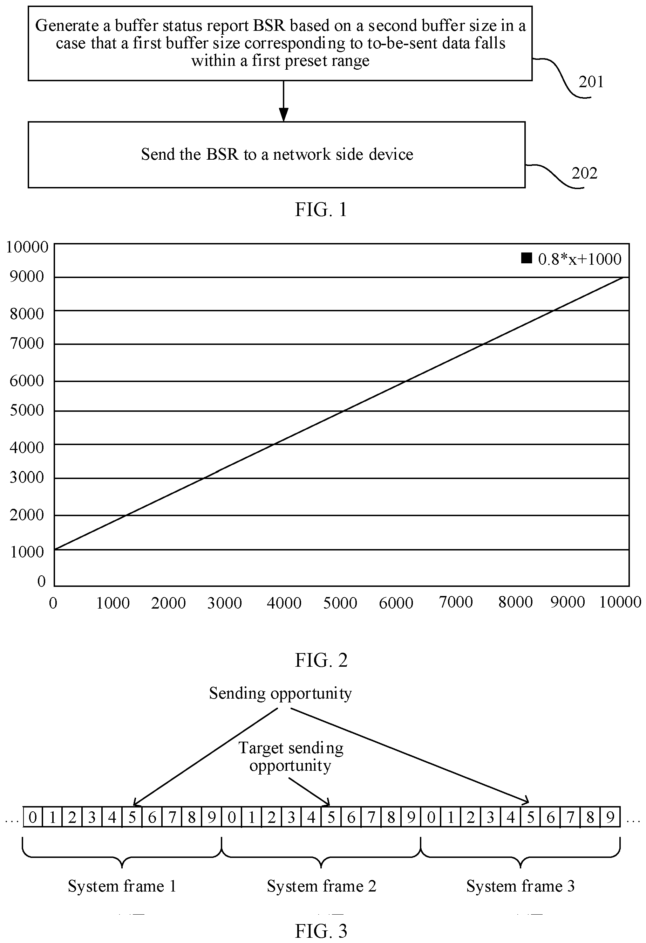

An embodiment of this application provides a scheduling request method. FIG. 1 is a flowchart of a scheduling request method according to an embodiment of this application. As shown in FIG. 1, the scheduling request method provided in this embodiment of this application may include the following step 201 and step 202.

Step 201: A terminal generates a buffer status report BSR based on a second buffer size in a case that a first buffer size corresponding to to-be-sent data falls within a first preset range.

The second buffer size is determined based on the first buffer size, and the second buffer size is greater than or equal to the first buffer size.

It should be noted that the buffer status report (Buffer Status Report, BSR) is used to apply to a network side device for uplink scheduling resources.

Optionally, in this embodiment of this application, the to-be-sent data is data detected by the terminal at a medium access control (Medium Access Control, MAC) layer.

It should be noted that in wireless communication, the MAC layer is mainly responsible for data transmission and radio resource allocation.

Optionally, in this embodiment of this application, the first buffer size of the to-be-sent data is used to measure whether data accumulation exists in the to-be-sent data. Further, the first buffer size of the to-be-sent data is related to a current wireless environment. Generally, when the wireless network environment has poor coverage or when the wireless network environment is congested, the terminal may be unable to obtain resource scheduling in time. Consequently, accumulation of the to-be-sent data exists on the terminal side.

Optionally, in this embodiment of this application, the terminal may detect a buffer value of the to-be-sent data at the MAC layer in real time or periodically. If it is detected that the buffer value (namely, the first buffer size) of the to-be-sent data falls within the first preset range, it indicates that data accumulation exists in the to-be-sent data.

Optionally, the first preset range may be a buffer size range greater than 0 and less than or equal to 3000 bytes, a buffer size range greater than 0 and less than or equal to 5000 bytes, or a buffer size range greater than 0 and less than or equal to 6000 bytes. It should be noted that the first preset range may be set depending on an actual requirement. This is not limited in embodiments of this application.

In this embodiment of this application, the first buffer size is an actual data buffer size of the to-be-sent data of the terminal.

In this embodiment of this application, the second buffer size represents an uplink network resource amount needed by the terminal to transmit the to-be-sent data.

In the related technology, the terminal detects the data buffer size (namely, the first buffer size) of the to-be-sent data of the terminal, obtains a buffer size index corresponding to the data buffer size through table look-up, and then sends, to the network side device, a BSR carrying the buffer size index, to apply for uplink scheduling resources. After receiving the BSR, the network side device sends an uplink grant to the terminal to indicate uplink resources available to the terminal. The network side device allocates the available uplink resources to the terminal based on a buffer size index field reported by the terminal.

It should be noted that the data buffer size of the terminal is represented by the buffer size index field (index) in a BSR frame format. Specifically, when reporting the BSR, the terminal does not directly carry information about the data buffer size of the to-be-sent data in the BSR, but obtains the index corresponding to the information about the data buffer size of the to-be-sent data through table look-up, and then reports the corresponding index.

Optionally, in this embodiment of this application, the terminal may query a predefined comparison table for an index corresponding to the second buffer size, and generate a BSR carrying the corresponding index. It can be understood that the index may indicate a larger buffer value.

In some possible embodiments, in a weak-field environment, in a case that the terminal detects that the buffer size of the to-be-sent data at the MAC layer falls within the first preset range, based on the actual data buffer size of a plurality of data packets, namely, the first buffer size, the terminal calculates a new data buffer size, namely, the second buffer size, greater than the actual data buffer size, obtains an index corresponding to the new data buffer size through table look-up, and generates a BSR carrying the index, to apply for allocation of more uplink resources to transmit the plurality of data packets.

Optionally, in this embodiment of this application, the second buffer size may be calculated by using the following formula (1):

$$BSvalue = a * x + b \qquad (1),$$

where
*BSvalue* is the second buffer size, x is a real buffer value of the to-be-sent data, *a* is a coefficient, and b is a constant.

For example, *a* may be a natural number greater than or equal to 1/2 and less than 1, and b may be a natural number greater than $x/2$ and less than $x$.

For example, when *a* is 1/2, *b* is 700, and the first buffer size of the to-be-sent data is 1000 bytes, the second buffer size is 1200 (that is, 1000* 1/2+700) bytes.

The following describes, by using an example in which the first preset range is (0, 5000], a process of calculating the second buffer size based on the first buffer size corresponding to the to-be-sent data.

For example, in the foregoing formula (1), if a value of *a* is 0.8 and a value of *b* is 1000, a calculation formula of the second buffer size *BSvalue* may be *BSvalue* = 0.8 × x + 1000.

FIG. 2 is a schematic diagram of a correspondence between a second buffer value and a first buffer value in a case that the first buffer value corresponding to the to-be-sent data falls within (0, 5000]. In FIG. 2, a horizontal axis indicates first buffer values, and a vertical axis indicates second buffer values. As shown in FIG. 2, a real buffer value of the to-be-sent data is 1000 bytes and then a corresponding second buffer size is 1800 bytes, a real buffer value of the to-be-sent data is 2000 bytes and then a corresponding second buffer size is 2600 bytes, a real buffer value of the to-be-sent data is 3000 bytes and then a corresponding second buffer size is 3400 bytes, and so on. In a case that a real buffer value of the to-be-sent data reaches an upper limit value of the first preset range, that is, 5000 bytes, a second buffer size *BSvalue* is also 5000 bytes. When a real value is greater than 5000 bytes, a calculated second buffer size *BSvalue* is less than the real buffer value of the to-be-sent data.

It should be noted that, when a real buffer value is less than 5000 bytes, the real value is considered as an acceptable accumulation value. If a *BSvalue* request (BSR) is sent in this range, scheduling on the network side is easily received. Therefore, reporting of the *BSvalue* is designed in the foregoing solution.

In the scheduling request method provided in this embodiment of this application, in a case that the terminal has a limited chip capability, power consumption capability, and component capability, more scheduling delivered by the network cannot be obtained in a "power breakthrough" manner or the like, and scheduling information delivered by the network to the terminal is entirely decided depending on logic of the network. In this application, through "software enhancement" on the terminal side, in a special BSR reporting manner and a special SR request manner in a weak-field environment, the network is indicated to deliver more network scheduling to the terminal to improve network quality. This achieves a lower uplink packet loss rate, a lower uplink BLER, and a higher throughput, thereby ultimately improving user experience of the terminal.

Step 202: The terminal sends the BSR to the network side device.

Optionally, in this embodiment of this application, the terminal may send the BSR to the network side device by using MAC CE signaling.

It should be noted that, in a case that the terminal has uplink resources to transmit the BSR, the terminal reports the BSR to the network side device. In a case that the terminal has no uplink resources to transmit the BSR, the terminal triggers a scheduling request (Scheduling Request, SR) process.

It should be noted that the SR is used by the terminal to apply to the network side device for scheduling new uplink data.

In this embodiment of this application, the terminal may report the buffer status report to the network side device, to provide the network side device with the data buffer size that needs to be scheduled.

For example, in a case that the terminal generates, based on the second buffer size, the BSR carrying the index, the terminal may send the BSR to the network side device, to provide, by using the index, the network side device with the data buffer size that needs to be scheduled.

In the scheduling request method provided in this embodiment of this application, the terminal generates the buffer status report BSR based on the second buffer size in a case that the first buffer size corresponding to the to-be-sent data falls within the first preset range, where the second buffer size is determined based on the first buffer size, and the second buffer size is greater than or equal to the first buffer size; and the terminal sends the BSR to the network side device. According to the method, in a case that the to-be-sent data is detected and data accumulation exists, the terminal may determine, based on the real buffer value of the to-be-sent data, the second buffer size greater than or equal to the real buffer value, generate the BSR based on the second buffer size, and report the BSR to the network side. In this way, in a case that accumulation of the to-be-sent data exists in a weak-field environment or a congestion environment, through user-defined reporting of the BSR corresponding to the buffer value greater than the real buffer value of the to-be-sent data, the network side device is indicated to allocate more radio resources to the terminal to send the to-be-sent data. This improves a throughput of data transmitted over a network, reduces a latency during data sending by the terminal, and improves data transmission efficiency.

Optionally, in this embodiment of this application, the scheduling request method provided in this embodiment of this application further includes the following step 203:

Step 203: The terminal sends a scheduling request SR in a target subframe in a case that the first buffer size corresponding to the to-be-sent data is greater than a first threshold.

The SR is used to request the network side device to allocate uplink resources to the terminal.

The target subframe includes a first subframe and a second subframe.

The first subframe is a subframe configured by the network side device for the SR.

The second subframe includes a subframe that is in a second system frame and that is corresponding to the first subframe, and the second system frame has an association relationship with a first system frame in which the first subframe is located.

In the related technology, before sending the BSR, the terminal needs to first send an SR to request scheduling of uplink resources from the network side device. After sending the SR, if there are available uplink resources, the terminal directly sends the BSR to the network side device. If there are no available resources to send the BSR, the terminal sends an SR to the network side device again, and sends the BSR on available resources after receiving an UL grant from the network side device.

Optionally, the first threshold may be 3000 bytes, 5000 bytes, 6000 bytes, or the like. The first threshold may be set depending on an actual requirement. This is not limited in embodiments of this application.

Optionally, the first threshold may be the upper limit value of the first preset range. For example, in a case that the first preset range is a buffer size range greater than 0 and less than or equal to 5000 bytes, that is, the first preset range is (0, 5000], the first threshold may be 5000 bytes.

Optionally, the network side device may configure an SR sending opportunity at a specific location in a system frame, so that after the terminal sends the SR to the network side device, the network side device, for example, a base station, can detect the SR. For example, the SR sending opportunity may be one subframe in the system frame. Generally, the network side device configures a sixth subframe in one system frame as a subframe in which an SR is to be sent.

It can be understood that a system frame is also referred to as a radio system frame that may be referred to as a radio frame for short, and English name thereof is "system frame". In an LTE frame structure, one radio frame is divided into 10 subframes, each subframe is 1 ms in time domain and includes 14 OFDM symbols. The SR is carried through a PUCCH, and is sent on a specific OFDM symbol in one subframe.

Optionally, the second system frame includes M system frames before and after the first system frame in which sending is performed, and M is a positive integer less than a second threshold. Optionally, the second threshold may be 2, 3, 4, or the like.

It should be noted that the second threshold is set to achieve the following objective: In addition to the first subframe in which regular sending is performed, the terminal may send the SR in a configured subframe in a system frame around a sending opportunity of the first system frame, to indicate the network to continuously deliver uplink scheduling.

In an example, the M system frames are M system frames before the first system frame in which sending is performed and M system frames after the first system frame in which sending is performed. In another example, the M system frames are a system frame before the first system frame in which sending is performed as well as a system frame after the first system frame in which sending is performed.

For example, if the second threshold is 2, the second system frame includes one system frame before the first system frame in which sending is performed as well as one system frame after the first system frame in which sending is performed.

For example, if a sending opportunity of the first system frame is i, the second system frame is a system frame whose sending opportunity is i-1 and a system frame whose sending opportunity is i+1. It can also be understood that the second system frame is a system frame that is adjacent to the first system frame and whose sending opportunity is before the sending opportunity of the first system frame as well as a system frame that is adjacent to the first system frame and whose sending opportunity is after the sending opportunity of the first system frame.

For another example, if a sending opportunity of the first system frame is i, the second system frame is a system frame whose sending opportunity is i-2 and a system frame whose sending opportunity is i+1. It can also be understood that the second system frame is a system frame that is separated from the first system frame by one system frame and whose sending opportunity is before the sending opportunity of the first system frame as well as a system frame that is adjacent to the first system frame and whose sending opportunity is after the sending opportunity of the first system frame.

For example, if the second threshold is 3, the second system frame includes two system frames before the first system frame in which sending is performed as well as two system frames after the first system frame in which sending is performed.

It can be understood that the terminal may define a plurality of system frames in which SRs are to be sent, to send more SRs to the network side device, and indicate the network side device to deliver uplink scheduling.

It should be noted that in a normal network configuration, the terminal configures two fields, namely, sr-ConfigIndex and sr-PUCCH-ResourceIndex, by using an RRC layer, to specify a unique SR resource for reporting by the terminal, and reports an SR only when the terminal needs to send uplink data but has no uplink resources. In other words, in the related technology, in a case that the terminal is to report an SR to the network side device, the network side device specifies a unique system frame to the terminal to report the SR.

For example, FIG. 3 is a schematic diagram of a system frame according to an embodiment of this application. FIG. 3 shows three system frames, which are represented by a system frame 1, a system frame 2, and a system frame 3. Each system frame includes 10 subframes identified by digits 0 to 9. Specifically, in each system frame, the digit 0 identifies a first subframe, that is, a 1st subframe; the digit 1 identifies a second subframe, that is, a 2nd subframe; and so on. The system frame 1 and the system frame 3 are indicated by the network side as system frames in which SRs are to be sent. 6th subframes in the system frame 1 and the system frame 3 are preconfigured subframes in which the SRs are to be sent. The terminal may additionally send the SR in a 6th subframe in the system frame 2 following the system frame 1 (or the system frame preceding the system frame 3). The 6th subframe in the system frame 2 is a target sending opportunity for sending the SR.

It can be understood that in the scheduling request method provided in this embodiment of this application, in addition to sending the SR in the subframes in the system frames indicated by the network side, the terminal may send the SR in a configured subframe in a system frame around the indicated system frames. In other words, in a manner of sending the SR in advance, the network is indicated to continuously deliver uplink scheduling, that is, an UL grant. In this way, in a case that accumulation of the to-be-sent data exists in a weak-field environment or a congestion environment, the terminal reports the SR in advance, to indicate the network side device to continuously deliver uplink scheduling for a plurality of times and allocate more radio resources to the terminal to send the to-be-sent data. This improves a throughput of data transmitted over a network, reduces a latency during data sending by the terminal, and improves data transmission efficiency.

Optionally, in this embodiment of this application, step 201 may include the following step 201a:

Step 201a: The terminal generates the BSR based on the second buffer size in a case that the first buffer size corresponding to the to-be-sent data falls within the first preset range and a transmission parameter of the terminal meets a predetermined transmission condition.

The transmission parameter includes at least one of the following:

signal quality of a transmitted signal and transmit power.

Optionally, the predetermined transmission condition includes at least one of the following:

the transmit power reaches a configured maximum transmit power for a cell; and

the signal quality of the transmitted signal meets a signal quality threshold.

For example, the transmit power is uplink transmit power of the terminal. It should be noted that, whether the uplink transmit power TX power reaches the configured maximum transmit power for the cell is indicated by using a p-Max value of a cellSelectionInfo field in a system message SIB1.

For example, the terminal may start to monitor the transmission parameter in a case that a packet data convergence protocol (Packet Data Convergence Protocol, PDCP) layer has data from an upper layer to be sent and data accumulation exists.

For example, in a case that the PDCP layer has to-be-sent data from the upper layer and a data amount corresponding to the to-be-sent data, namely, a PDCP data volume, is greater than 0, the terminal determines that data accumulation exists, and monitors the transmission parameter in a case of data accumulation.

It should be noted that the PDCP layer is a second layer of a radio interface protocol stack, and processes radio resource control (Radio Resource Control, RRC) messages on a control plane and internet protocol (Internet Protocol, IP) packets on a user plane. The IP packets may also be referred to as IP data packets. On the user plane, after obtaining the IP data packets from the upper layer, the PDCP layer may compress and encrypt the IP data packets, and then transmit processed IP data packets to an RLC layer for data sending.

For example, the signal quality of the transmitted signal may be a path loss value pathloss, reference signal received power RSRP, a signal-to-noise ratio SINR, or the like of the signal sent by the terminal. This is not limited in embodiments of this application.

It should be noted that a path loss, that is, path attenuation, is an average signal power loss caused by a propagation distance and a propagation environment between a transmitter and a receiver, and is a measure strongly correlated with the propagation distance, the propagation environment, and a carrier frequency.

For example, in a case that the signal quality of the transmitted signal is a path loss value, that the signal quality of the transmitted signal meets a signal quality threshold means that the path loss value is less than a third threshold. For example, the third threshold may be 100, 120, 140, or the like. This is not limited in embodiments of this application.

It should be noted that a smaller path loss value indicates better signal quality of the terminal. An upper limit of the path loss value is set to measure a current channel condition of the terminal. In a case that the signal condition continues to deteriorate, it is considered by default that performing the scheduling request method provided in this embodiment of this application brings a small gain or effect. Therefore, the path loss value threshold is set as an effective upper limit for performing a scheduling request process.

In this embodiment of this application, in a case that the uplink transmit power has reached the configured maximum transmit power for the cell, the path loss value of the terminal is small, and data accumulation exists, the terminal may obtain a larger buffer value based on the real buffer value of the to-be-sent data, and report the buffer value by using the BSR, to request more uplink resources from the network side device. This improves data transmission efficiency of the terminal.

Optionally, in this embodiment of this application, step 201 may include the following step 201b:

Step 201b: In a case that the first buffer size corresponding to the to-be-sent data falls within the first preset range, the terminal generates the BSR based on the second buffer size if it is detected that a first timer expires.

For example, the terminal may start a user-defined timer Tpower_max in a case that the transmission parameter of the terminal meets the predetermined transmission condition, and set a default value to one second. If it is detected that the user-defined timer expires, it indicates that the predetermined transmission condition is continuously met. In this case, the terminal may perform steps of the scheduling request method provided in this embodiment of this application. If it is detected that the user-defined timer does not expire, that is, the timer is interrupted, it indicates that the predetermined transmission condition is not continuously met and is met only for a short time. In this case, the terminal continues to monitor the buffer value of the to-be-sent data.

In a possible embodiment, when detecting that the PDCP layer has data from the upper layer to be sent and data accumulation exists, the terminal monitors the TX power and the pathloss value, starts the user-defined timer Tpower_max for the TX power and the pathloss in a case that the TX power reaches the configured maximum transmit power for the cell and the pathloss is less than 140, and sets the default value of Tpower_max to 1s. The terminal determines whether the user-defined timer Tpower_max expires; and if the timer expires, generates the BSR based on the second buffer size in a case that the first buffer size corresponding to the to-be-sent data falls within the first preset range.

In this way, in a case that the terminal continuously meets the predetermined transmission condition, the terminal may send the BSR to the network side device to report the larger buffer value. In a case that the terminal does not continuously meet the predetermined transmission condition, the terminal continues to monitor whether a buffer value of remaining to-be-sent data of the terminal meets the condition. This can avoid a waste of resources caused by sending the BSR and/or the SR to the network side device in a case that a signal environment is continuously harsh or the transmit power of the terminal is not adjusted to the utmost, so that a larger gain can be obtained while consuming fewer radio resources.

The scheduling request method provided in this embodiment of this application may be performed by a scheduling request apparatus. In embodiments of this application, the scheduling request apparatus provided in embodiments of this application is described by using an example in which the scheduling request apparatus performs the scheduling request method.

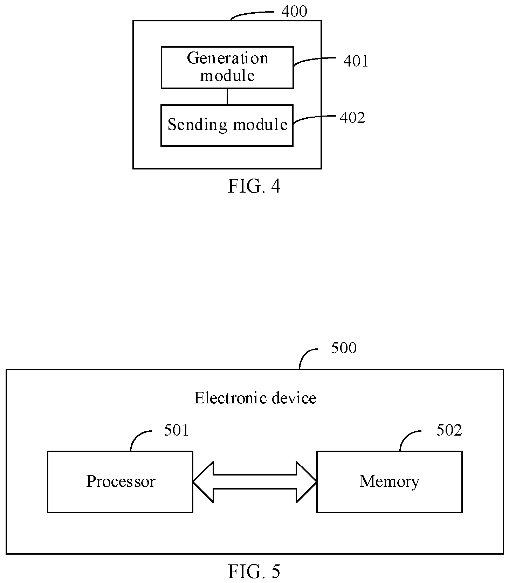

As shown in FIG. 4, an embodiment of this application provides a schematic diagram of a structure of a scheduling request apparatus. As shown in FIG. 4, the scheduling request apparatus 400 includes a generation module 401 and a sending module 402, where

the generation module 401 is configured to generate a buffer status report BSR based on a second buffer size in a case that a first buffer size corresponding to to-be-sent data falls within a first preset range, where the second buffer size is determined based on the first buffer size, and the second buffer size is greater than or equal to the first buffer size; and
the sending module 402 is configured to send the BSR generated by the generation module 401 to a network side device.

Optionally, in this embodiment of this application, the sending module 402 is further configured to send a scheduling request SR in a target subframe in a case that the first buffer size corresponding to the to-be-sent data is greater than a first threshold.

The SR is used to request the network side device to allocate uplink resources to a terminal.

The target subframe includes a first subframe and a second subframe.

The first subframe is a subframe configured by the network side device for the SR.

The second subframe includes a subframe that is in a second system frame and that is corresponding to the first subframe, and the second system frame has an association relationship with a first system frame in which the first subframe is located.

Optionally, in this embodiment of this application, the second system frame includes M system frames before and after the first system frame in which sending is performed, and M is a positive integer less than a second threshold.

Optionally, in this embodiment of this application, the generation module 401 is specifically configured to generate the BSR based on the second buffer size in a case that the first buffer size corresponding to the to-be-sent data falls within the first preset range and a transmission parameter of the terminal meets a predetermined transmission condition.

The transmission parameter includes at least one of the following:
signal quality of a transmitted signal and transmit power.

Optionally, in this embodiment of this application, the generation module 401 is specifically configured to: in a case that the first buffer size corresponding to the to-be-sent data falls within the first preset range, generate the BSR based on the second buffer size if it is detected that a first timer expires.

In the scheduling request apparatus provided in this embodiment of this application, the scheduling request apparatus generates the buffer status report BSR based on the second buffer size in a case that the first buffer size corresponding to the to-be-sent data falls within the first preset range, where the second buffer size is determined based on the first buffer size, and the second buffer size is greater than or equal to the first buffer size; and the scheduling request apparatus sends the BSR to the network side device. In a case that the to-be-sent data is detected and data accumulation exists, the scheduling request apparatus may determine, based on a real buffer value of the to-be-sent data, the second buffer size greater than the real buffer value, generate the BSR based on the second buffer size, and report the BSR to the network side. In this way, in a case that accumulation of the to-be-sent data exists in a weak-field environment or a congestion environment, through user-defined reporting of the BSR corresponding to the buffer value greater than the real buffer value of the to-be-sent data, the network side device is indicated to allocate more radio resources to the terminal to send the to-be-sent data. This improves a throughput of data transmitted over a network, reduces a latency during data sending by the terminal, and improves data transmission efficiency.

The scheduling request apparatus in this embodiment of this application may be an electronic device, or may be a component in an electronic device, for example, an integrated circuit or a chip. The electronic device may be a terminal or a device other than a terminal. For example, the electronic device may be a mobile phone, a tablet computer, a notebook computer, a palmtop computer, a vehicle-mounted electronic device, a mobile internet device (Mobile Internet Device, MID), an augmented reality (augmented reality, AR)/virtual reality (virtual reality, VR) device, a robot, a wearable device, an ultra-mobile personal computer (ultra-mobile personal computer, UMPC), a netbook, a personal digital assistant (personal digital assistant, PDA), or the like; or may be a server, a network-attached storage (Network-Attached Storage, NAS), a personal computer (personal computer, PC), a television (television, TV), a teller machine, a self-service machine, or the like. This is not specifically limited in embodiments of this application.

The scheduling request apparatus in this embodiment of this application may be an apparatus with an operating system. The operating system may be an Android (Android) operating system, an iOS operating system, or another possible operating system. This is not specifically limited in embodiments of this application.

The scheduling request apparatus provided in this embodiment of this application can implement each process implemented in the method embodiment in FIG. 1 to FIG. 3. To avoid repetition, details are not described herein again.

Optionally, as shown in FIG. 5, an embodiment of this application further provides an electronic device 500, including a processor 501 and a memory 502. The memory 502 stores a program or instructions capable of being running on the processor 501. When the program or instructions are executed by the processor 501, each process of the foregoing scheduling request method embodiment is implemented, and same technical effects can be achieved. To avoid repetition, details are not described herein again.

It should be noted that the electronic device in this embodiment of this application includes a mobile electronic device and a non-mobile electronic device.

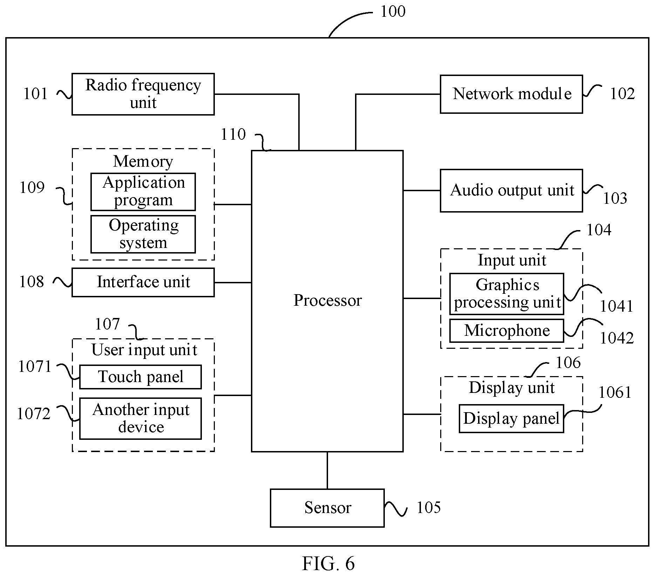

FIG. 6 is a schematic diagram of a hardware structure of an electronic device according to an embodiment of this application.

The electronic device 100 includes but is not limited to the following components: a radio frequency unit 101, a network module 102, an audio output unit 103, an input unit 104, a sensor 105, a display unit 106, a user input unit 107, an interface unit 108, a memory 109, and a processor 110.

A person skilled in the art can understand that the electronic device 100 may further include a power supply (for example, a battery) for supplying power to the components. The power supply may be logically connected to the processor 110 by using a power management system, so that functions such as charging, discharging, and power consumption management are implemented by using the power management system. The structure of the electronic device shown in FIG. 6 does not constitute any limitation on the electronic device, and the electronic device may include more or fewer components than those shown in the figure, a combination of some components, or a different arrangement of the components. Details are not described herein.

The processor 110 is configured to generate a buffer status report BSR based on a second buffer size in a case that a first buffer size corresponding to to-be-sent data falls within a first preset range, where the second buffer size is determined based on the first buffer size, and the second buffer size is greater than the first buffer size.

The radio frequency unit 101 is configured to send the BSR generated by the processor 110 to a network side device.

Optionally, in this embodiment of this application, the radio frequency unit 101 is further configured to send a scheduling request SR in a target subframe in a case that the first buffer size corresponding to the to-be-sent data is greater than a first threshold.

The SR is used to request the network side device to allocate uplink resources to a terminal.

The target subframe includes a first subframe and a second subframe.

The first subframe is a subframe configured by the network side device for the SR.

The second subframe includes a subframe that is in a second system frame and that is corresponding to the first subframe, and the second system frame has an association relationship with a first system frame in which the first subframe is located.

Optionally, in this embodiment of this application, the second system frame includes M system frames before and after the first system frame in which sending is performed, and M is a positive integer less than a second threshold.

Optionally, in this embodiment of this application, the processor 110 is specifically configured to generate the BSR based on the second buffer size in a case that the first buffer size corresponding to the to-be-sent data falls within the first preset range and a transmission parameter of the terminal meets a predetermined transmission condition.

The transmission parameter includes at least one of the following:
signal quality of a transmitted signal and transmit power.

Optionally, in this embodiment of this application, the processor 110 is specifically configured to: in a case that the first buffer size corresponding to the to-be-sent data falls within the first preset range, generate the BSR based on the second buffer size if it is detected that a first timer expires.

In the electronic device provided in this embodiment of this application, the electronic device generates the buffer status report BSR based on the second buffer size in a case that the first buffer size corresponding to the to-be-sent data falls within the first preset range, where the second buffer size is determined based on the first buffer size, and the second buffer size is greater than or equal to the first buffer size; and the electronic device sends the BSR to the network side device. In a case that the to-be-sent data is detected and data accumulation exists, the electronic device may determine, based on a real buffer value of the to-be-sent data, the second buffer size greater than the real buffer value, generate the BSR based on the second buffer size, and report the BSR to the network side. In this way, in a case that accumulation of the to-be-sent data exists in a weak-field environment or a congestion environment, through user-defined reporting of the BSR corresponding to the buffer value greater than the real buffer value of the to-be-sent data, the network side device is indicated to allocate more radio resources to the terminal to send the to-be-sent data. This improves a throughput of data transmitted over a network, reduces a latency during data sending by the terminal, and improves data transmission efficiency.

It should be understood that the input unit 104 may include a graphics processing unit (graphics processing unit, GPU) 1041 and a microphone 1042, and the graphics processing unit 1041 processes still images or video image data obtained by an image capturing apparatus (for example, a camera) in a video capture mode or an image capture mode. The display unit 106 may include a display panel 1061, and the display panel 1061 may be configured in a form of a liquid crystal display, an organic light-emitting diode, or the like. The user input unit 107 includes at least one of a touch panel 1071 and another input device 1072. The touch panel 1071 is also referred to as a touchscreen. The touch panel 1071 may include two parts: a touch detection apparatus and a touch controller. The another input device 1072 may include but is not limited to a physical keyboard, a function key (for example, a volume control key or an on/off key), a trackball, a mouse, and a joystick. This is not described herein again.

The memory 109 may be configured to store a software program and various types of data. The memory 109 may mainly include a first storage area storing a program or instructions and a second storage area storing data. The first storage area may store an operating system, an application program or instructions (for example, a voice playback function and an image playback function) needed by at least one function, and the like. In addition, the memory 109 may include a volatile memory or a non-volatile memory, or may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (Synchlink DRAM, SLDRAM), and a direct rambus random access memory (Direct Rambus RAM, DR RAM). The memory 109 in this embodiment of this application includes but is not limited to these memories and any other suitable types of memories.

The processor 110 may include one or more processing units. Optionally, an application processor and a modem processor are integrated into the processor 110. The application processor mainly processes operations on an operating system, a user interface, an application program, and the like. The modem processor mainly processes wireless communication signals, for example, is a baseband processor. It can be understood that the modem processor may alternatively not be integrated into the processor 110.

An embodiment of this application further provides a readable storage medium. The readable storage medium stores a program or instructions. When the program or instructions are executed by a processor, each process of the foregoing scheduling request method embodiment is implemented, and same technical effects can be achieved. To avoid repetition, details are not described herein again.

The processor is the processor in the electronic device in the foregoing embodiment. The readable storage medium includes a computer-readable storage medium, for example, a computer read-only memory ROM, a random access memory RAM, a magnetic disk, or an optical disc.

An embodiment of this application further provides a chip. The chip includes a processor and a communication interface. The communication interface is coupled to the processor. The processor is configured to run a program or instructions to implement each process of the foregoing scheduling request method embodiment, and can achieve same technical effects. To avoid repetition, details are not described herein again.

It should be understood that the chip mentioned in this embodiment of this application may also be referred to as a system-level chip, a system chip, a system on a chip, a system-on-chip, or the like.

An embodiment of this application provides a computer program product. The program product is stored in a storage medium. The program product is executed by at least one processor to implement each process of the foregoing scheduling request method embodiment, and can achieve same technical effects. To avoid repetition, details are not described herein again.

It should be noted that in this specification, terms "include", "comprise", or any other variants thereof are intended to cover a non-exclusive inclusion, so that a process, a method, an article, or an apparatus that includes a list of elements includes those elements, and also includes other elements not expressly listed, or further includes elements inherent to this process, method, article, or apparatus. Without more limitations, an element defined by a sentence "including one" does not exclude a case that there are still other same elements in the process, method, article, or apparatus that includes the element. In addition, it should be noted that the scopes of the method and apparatuses in implementations of this application are not limited to performing functions in the order shown or discussed, and may further include performing functions in a substantially simultaneous manner or in a reverse order according to the functions involved. For example, the described method may be performed in an order different from the described order, and various steps may be further added, omitted, or combined. Moreover, features described with reference to some examples may be combined in other examples.

According to the descriptions in the foregoing implementations, a person skilled in the art can clearly understand that the method in the foregoing embodiment may be implemented by software in addition to a necessary general hardware platform or by hardware only. In many cases, the former is a preferred implementation. Based on such an understanding, the technical solutions of this application essentially or the part contributing to the prior art may be implemented in a form of a computer software product. The computer software product is stored in a storage medium (for example, a ROM/RAM, a magnetic disk, or an optical disc), and includes several instructions for instructing a terminal (which may be a mobile phone, a computer, a server, a network device, or the like) to perform the method described in embodiments of this application.

The foregoing described embodiments of this application with reference to the accompanying drawings. However, this application is not limited to the foregoing specific implementations, and the foregoing specific implementations are merely examples but are not limitative. A person of ordinary skill in the art can make various variations under the teaching of this application without departing from the essence of this application and the protection scope of the claims, and such variations shall fall within the protection scope of this application.

**Claims**

1. A scheduling request method, applied to a terminal, wherein the method comprises:

    generating a buffer status report BSR based on a second buffer size in a case that a first buffer size corresponding to to-be-sent data falls within a first preset range, wherein the second buffer size is determined based on the first buffer size, and the second buffer size is greater than or equal to the first buffer size; and
sending the BSR to a network side device.

2. The method according to claim 1, wherein the method further comprises:

    sending a scheduling request SR in a target subframe in a case that the first buffer size corresponding to the to-be-sent data is greater than a first threshold; wherein
    the SR is used to request the network side device to allocate uplink resources to the terminal;
    the target subframe comprises a first subframe and a second subframe;
    the first subframe is a subframe configured by the network side device for the SR; and
    the second subframe comprises a subframe that is in a second system frame and that is corresponding to the first subframe, and the second system frame has an association relationship with a first system frame in which the first subframe is located.

3. The method according to claim 2, wherein the second system frame comprises M system frames before and after the first system frame in which sending is performed, and M is a positive integer less than a second threshold.

4. The method according to claim 1, wherein the generating a BSR based on a second buffer size in a case that a first buffer size corresponding to to-be-sent data falls within a first preset range comprises:

    generating the BSR based on the second buffer size in a case that the first buffer size corresponding to the to-be-sent data falls within the first preset range and a transmission parameter of the terminal meets a predetermined transmission condition; wherein
    the transmission parameter comprises at least one of the following:
    signal quality of a transmitted signal and transmit power.

5. The method according to any one of claims 1 to 4, wherein the generating a BSR based on a second buffer size in a case that a first buffer size corresponding to to-be-sent data falls within a first preset range comprises:
in a case that the first buffer size corresponding to the to-be-sent data falls within the first preset range, generating the BSR based on the second buffer size if it is detected that a first timer expires.

6. A scheduling request apparatus, wherein the apparatus comprises a generation module and a sending module;

the generation module is configured to generate a buffer status report BSR based on a second buffer size in a case that a first buffer size corresponding to to-be-sent data falls within a first preset range, wherein the second buffer size is determined based on the first buffer size, and the second buffer size is greater than or equal to the first buffer size; and
the sending module is configured to send the BSR generated by the generation module to a network side device.

7. The apparatus according to claim 6, wherein

the sending module is further configured to send a scheduling request SR in a target subframe in a case that the first buffer size corresponding to the to-be-sent data is greater than a first threshold; wherein
the SR is used to request the network side device to allocate uplink resources to a terminal;
the target subframe comprises a first subframe and a second subframe;
the first subframe is a subframe configured by the network side device for the SR; and
the second subframe comprises a subframe that is in a second system frame and that is corresponding to the first subframe, and the second system frame has an association relationship with a first system frame in which the first subframe is located.

8. The apparatus according to claim 7, wherein the second system frame comprises M system frames before and after the first system frame in which sending is performed, and M is a positive integer less than a second threshold.

9. The apparatus according to claim 6, wherein

the generation module is specifically configured to generate the BSR based on the second buffer size in a case that the first buffer size corresponding to the to-be-sent data falls within the first preset range and a transmission parameter of the terminal meets a predetermined transmission condition; wherein
the transmission parameter comprises at least one of the following:
signal quality of a transmitted signal and transmit power.

10. The apparatus according to any one of claims 6 to 9, wherein

the generation module is specifically configured to: in a case that the first buffer size corresponding to the to-be-sent data falls within the first preset range, generate the BSR based on the second buffer size if it is detected that a first timer expires.

11. An electronic device, comprising a processor and a memory, wherein the memory stores a program or instructions capable of being running on the processor, and when the program or instructions are executed by the processor, steps of the scheduling request method according to any one of claims 1 to 5 are implemented.

12. A readable storage medium, wherein the readable storage medium stores a program or instructions, and when the program or instructions are executed by a processor, steps of the scheduling request method according to any one of claims 1 to 5 are implemented.

13. A computer program product, wherein the program product is executed by at least one processor to implement the scheduling request method according to any one of claims 1 to 5.

14. A chip, wherein the chip comprises a processor and a communication interface, the communication interface is coupled to the processor, and the processor is configured to run a program or instructions, to implement the scheduling request method according to any one of claims 1 to 5.

Generate a buffer status report BSR based on a second buffer size in a
case that a first buffer size corresponding to to-be-sent data falls
within a first preset range

201

Send the BSR to a network side device

202

FIG. 1

FIG. 2

FIG. 3

400

┌─────────────────────────────────┐
│  ┌───────────────────────┐      │
│  │     Generation        │──── 401
│  │      module           │      │
│  └───────────────────────┘      │
│  ┌───────────────────────┐      │
│  │   Sending module      │──── 402
│  └───────────────────────┘      │
└─────────────────────────────────┘

FIG. 4

500

┌─────────────────────────────────────────────────────────┐
│                  Electronic device                       │
│        501                           502                 │
│  ┌───────────────┐           ┌───────────────┐          │
│  │               │  ⟸═══⟹    │               │          │
│  │   Processor   │           │    Memory     │          │
│  │               │           │               │          │
│  └───────────────┘           └───────────────┘          │
└─────────────────────────────────────────────────────────┘

FIG. 5

FIG. 6

## INTERNATIONAL SEARCH REPORT

| | International application No. |
|---|---|
| | **PCT/CN2023/094779** |

**A. CLASSIFICATION OF SUBJECT MATTER**

H04W24/02(2009.01)i

According to International Patent Classification (IPC) or to both national classification and IPC

**B. FIELDS SEARCHED**

Minimum documentation searched (classification system followed by classification symbols)

IPC: H04W H04L H04B

Documentation searched other than minimum documentation to the extent that such documents are included in the fields searched

Electronic data base consulted during the international search (name of data base and, where practicable, search terms used)

WPABSC, CNTXT, VCN, VEN, ENTXT, CJFD, 3GPP: 调度, 时延, 缓存, 阈值, 缓存状态报告, 调度请求, 子帧, 系统帧, 发射功率, 信号质量, 定时, schedule, delay, threshold, buffer status report, BSR, scheduling request, SR, subframe, system frame, TX power, QoS, timing

**C. DOCUMENTS CONSIDERED TO BE RELEVANT**

| Category* | Citation of document, with indication, where appropriate, of the relevant passages | Relevant to claim No. |
|---|---|---|
| X | CN 106714213 A (BEIJING XIAOMI MOBILE SOFTWARE CO., LTD.) 24 May 2017 (2017-05-24) <br> description, paragraphs 0054-0124 | 1, 4-6, 9-14 |
| X | CN 111294792 A (OPPO GUANGDONG MOBILE TELECOMMUNICATIONS CORP., LTD.) 16 June 2020 (2020-06-16) <br> description, paragraphs 0063-0145 | 1, 4-6, 9-14 |
| A | CN 110622605 A (FUJITSU LTD.) 27 December 2019 (2019-12-27) <br> entire document | 1-14 |
| A | CN 108024381 A (ZTE CORP.) 11 May 2018 (2018-05-11) <br> entire document | 1-14 |
| A | WO 2018080561 A1 (INTEL CORP.) 03 May 2018 (2018-05-03) <br> entire document | 1-14 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **23 August 2023** | **28 August 2023** |

| Name and mailing address of the ISA/CN | Authorized officer |
|---|---|
| China National Intellectual Property Administration (ISA/ CN) <br> China No. 6, Xitucheng Road, Jimenqiao, Haidian District, Beijing 100088 | |
| | Telephone No. |

Form PCT/ISA/210 (second sheet) (July 2022)

INTERNATIONAL SEARCH REPORT
Information on patent family members

International application No.

**PCT/CN2023/094779**

| Patent document cited in search report | | | Publication date (day/month/year) | Patent family member(s) | | | Publication date (day/month/year) |
|---|---|---|---|---|---|---|---|
| CN | 106714213 | A | 24 May 2017 | EP | 3343996 | A1 | 04 July 2018 |
| | | | | US | 2018192319 | A1 | 05 July 2018 |
| | | | | WO | 2018120906 | A1 | 05 July 2018 |
| CN | 111294792 | A | 16 June 2020 | EP | 3687204 | A1 | 29 July 2020 |
| | | | | EP | 3687204 | A4 | 19 August 2020 |
| | | | | EP | 3687204 | B1 | 12 April 2023 |
| | | | | BR | 112020005472 | A2 | 29 September 2020 |
| | | | | US | 2021153072 | A1 | 20 May 2021 |
| | | | | US | 11665582 | B2 | 30 May 2023 |
| | | | | MX | 2020002877 | A | 22 July 2020 |
| | | | | WO | 2019056253 | A1 | 28 March 2019 |
| | | | | KR | 20200053600 | A | 18 May 2020 |
| | | | | KR | 102425771 | B1 | 27 July 2022 |
| | | | | US | 2020236583 | A1 | 23 July 2020 |
| | | | | US | 10932154 | B2 | 23 February 2021 |
| | | | | RU | 2749102 | C1 | 04 June 2021 |
| | | | | JP | 2021501491 | A | 14 January 2021 |
| | | | | JP | 7194730 | B2 | 22 December 2022 |
| | | | | CA | 3076147 | A1 | 28 March 2019 |
| | | | | AU | 2017432714 | A1 | 07 May 2020 |
| | | | | SG | 11202002512 | SA | 29 April 2020 |
| | | | | TW | 201918104 | A | 01 May 2019 |
| CN | 110622605 | A | 27 December 2019 | WO | 2018227814 | A1 | 20 December 2018 |
| | | | | US | 2020077295 | A1 | 05 March 2020 |
| | | | | US | 11277766 | B2 | 15 March 2022 |
| | | | | WO | 2018227483 | A1 | 20 December 2018 |
| | | | | KR | 20190132459 | A | 27 November 2019 |
| | | | | KR | 102278948 | B1 | 19 July 2021 |
| | | | | EP | 3641465 | A1 | 22 April 2020 |
| | | | | EP | 3641465 | A4 | 03 March 2021 |
| | | | | JP | 2020523835 | A | 06 August 2020 |
| | | | | JP | 6863485 | B2 | 21 April 2021 |
| | | | | US | 2019335357 | A1 | 31 October 2019 |
| | | | | US | 10542455 | B2 | 21 January 2020 |
| CN | 108024381 | A | 11 May 2018 | None | | | |
| WO | 2018080561 | A1 | 03 May 2018 | None | | | |

Form PCT/ISA/210 (patent family annex) (July 2022)

**REFERENCES CITED IN THE DESCRIPTION**

**Patent documents cited in the description**

- CN 202210555130